# EUROPEAN PATENT SPECIFICATION

(11) **EP 3 087 292 B1**
(45) Date of publication and mention of the grant of the patent: **24.07.2019**
(21) Application number: 14827452.5
(22) Date of filing: 24.12.2014
(51) Int. Cl.: F16G 5/16

(54) **METHOD FOR ASSEMBLING A DRIVE BELT WITH DIFFERENT TYPES OF TRANSVERSE MEMBERS FOR A CONTINUOUSLY VARIABLE TRANSMISSION AND A THUS ASSEMBLED DRIVE BELT**
VERFAHREN ZUR MONTAGE EINES ANTRIEBSRIEMENS MIT VERSCHIEDENARTIGEN TRAVERSEN FÜR EIN STUFENLOSES GETRIEBE UND AUF DIESE WEISE ZUSAMMENGESETZTER ANTRIEBSRIEMEN
PROCÉDÉ POUR ASSEMBLER UNE COURROIE DE TRANSMISSION POURVUE DE DIFFÉRENTS TYPES D'ÉLÉMENTS TRANSVERSAUX POUR UNE TRANSMISSION VARIABLE EN CONTINU ET UNE COURROIE DE TRANSMISSION ASSEMBLÉE AINSI

(30) Priority: 24.12.2013 NL 1040569
(43) Date of publication of application: 02.11.2016
(73) Proprietor: Robert Bosch GmbH, 70442 Stuttgart (DE)
(72) Inventor: VAN DER NOLL, Erik, NL-5000 AM Tilburg (NL); VAN DER VELDE, Arie Gerrit Isaak, NL-5014 LW Tilburg (NL); KURZ, Georg, NL-5000 AM Tilburg (NL)
(74) Representative: Plevier, Gabriël Anton Johan Maria
(86) International application number: PCT/EP2014/079327
(87) International publication number: WO 2015/097294

(56) References cited:
- EP-A2- 1 178 240
- JP-A- 2007 257 608
- JP-A- 2013 133 894
- JP-U- S61 103 651
- US-A1- 2005 241 170
- US-A1- 2006 079 361
- US-A1- 2006 135 306

## Description

The present invention relates to a drive belt for a continuously variable transmission, which drive belt is in particular destined to be arranged around two pulleys of the transmission and which drive belt comprises a plurality of discrete transverse elements, i.e. transverse members for contacting the transmission pulleys, as well as one or more endless, i.e. annular, carriers for carrying and guiding the transverse members in the transmission. The present type of drive belt is also referred as a pushbelt.

The endless carrier of the drive belt is typically composed of a plurality of mutually nested, continuous flexible metal bands and is also known as a ring set. The endless carrier is at least partly inserted in a recess provided in the transverse members. In case the drive belt comprises only one endless carrier, such carrier is typically mounted in a central recess of the transverse members that opens towards the radial outside of the drive belt. However, usually the drive belt is provided with at least two endless carriers that are each mounted in a respective one of two recesses of the transverse members, which recesses then open towards a respective axial or lateral side of the transverse members, i.e. of the drive belt.

The transverse members of the drive belt are slidingly arranged along the circumference of the endless carrier or carriers in a virtually continuous row, such that these members are able to transmit forces that are related to a movement of the drive belt. The transverse members have two main body surfaces that, at least partly, extend substantially parallel with respect to each other and that are separated from each other over the (local) thickness of the transverse member by a circumferential side surface thereof. As seen along the circumference of the carrier, the transverse members have a comparatively small dimension, i.e. thickness, such that a several hundreds thereof are present in the drive belt. Adjoining transverse members are designed to be able to tilt relative to one another, such that the belt is able to follow a curved trajectory. To accommodate and control such relative tilting, one of the two main body surfaces of the two adjoining transverse members in the drive belt that are in mutual contact is provided with a (so-called) rocking edge in the form of an axially and radially extending section of the respective main body surface(s) that is convexly curved in radial direction. In this respect, it is noted that the radial direction is defined relative to the drive belt when it is placed in a circular posture.

Parts of the side surface of the transverse members, which parts are predominantly oriented in the axial direction, i.e. widthwise, are corrugated and are intended for frictionally contacting the transmission pulleys, in particular by being clamped widthwise between two conical sheaves of such pulleys. The friction contact between the transverse members and the conical pulley sheaves allows a force to be transferred there between, such that the drive belt can transmit a drive torque and rotational movement from one transmission pulley to the other.

Although, typically, the majority of the transverse members of a drive belt are identically shaped, it is also well-known, for example from the United States patent publication US-A-2006/0079361, to include transverse members having a mutually different thickness into a single drive belt in order to attenuate the noise that is caused by the transverse members successively impacting the pulleys during operation of the transmission, at least relative to a standard belt including transverse members having mutually identical thickness only. More specifically, according to US-A-2006/0079361, a plurality of drive belts are randomly assembled from both first and second transverse members that differ only by their thickness and the noise that is generated during operation of the transmission is measured for all of these drive belts. In relation to the drive belt that is associated with the least noise being generated by the transmission, the sequence of the said first and second transverse members is determined and the mass production of the drive belt takes place according to such determined sequence.

Another example of the same principle of applying transverse members of different thickness in the drive belt is given by the US patent application No. 8104159. According to US8104159 the total number of transverse members in the drive belt is split into two or more consecutive groups of transverse members, with each such group being defined by a specific ratio of thinner versus thicker transverse members that are randomly mixed.

Yet another example of the said principle is given by the Japanese patent publication No. 2007257708. JP2007257708 discloses a practical method for determining an arrangement of two transverse members with different thickness in the belt's circumferential direction for fully reducing peak values of vibration and noise.

Although these known drive belt assembly methods of randomizing the thickness of the transverse members of the drive belt can indeed be successful in reducing transmission noise, they are less suited for mass producing the drive belt. In particular, these known methods do not provide for any flexibility in terms of the ratio between the thinner versus the thicker transverse members between the produced drive belts, nor is it possible to influence the length of the complete row of transverse members that is incorporated in the drive belt, e.g. to compensate manufacturing tolerances in the thickness of the individual transverse member and/or in the circumference length of the endless carrier.

It is an object of the present disclosure to provide for a drive belt assembly method that is favorable in terms of the said transmission noise that is produced thereby, but that also favors the mass production of the drive belt. According to the present disclosure, such object is achieved with the drive belt assembly method in accordance with the claim 1 hereinafter. In such novel drive belt assembly method the complete row of transverse members included in the drive belt is provided in at least two row parts or sections, whereof one row section is provided on the endless carrier of the drive belt according to a predetermined sequence of two or more types of transverse members that differ at least in terms of their thickness and whereof the other one row section is assembled by filling the remaining circumference length of the endless carrier with transverse members, which latter transverse members thus constitute the said other one row section.

Hereby, it is noted that the said predetermined sequence of transverse members in the said one row section is (pre-)defined such that only a minimal noise is generated during operation of the transmission, for example by empirical means, as described in US-A-2006/ 0079361, or by (computer) modeling.

The drive belts that are mass produced according to this assembly method thus include a row section of the complete row of transverse members wherein the thickness of the subsequent transverse members shows the same sequence, as well as a row section that contains transverse members of any type, i.e. thickness. This novel assembly method comes with the advantage that the said other one row section, assembled from transverse members of any type, provides the desired flexibility in terms of the ratio between the thinner versus the thicker transverse members between the produced drive belts. This flexibility is of course advantageous, because it allows for a likewise flexible production of the transverse members of the different thickness types.

This novel assembly method and the drive belts that are obtained thereby rely, amongst others, on the observation that a noticeable noise attenuation effect of the predetermined sequence of two or more types of transverse members can already be obtained if such predetermined sequence includes only a part of the complete row of transverse members included in the drive belt. In this respect, it has been determined that such predetermined sequence, i.e. the said one row section, should preferably include at least 70% of the total number of transverse members in the drive belt in order to attain the said noticeable noise attenuation effect, at least relative to the said standard drive belt with transverse members of identical thickness.

In a preferred embodiment of the above, novel assembly method, the following three subsequent steps are included therein:
- the size of a clearance gap that has remained between the transverse members of the complete row of transverse members of the drive belt in the circumference direction of the endless carrier is determined,
- subsequently, it is determined whether or not such clearance gap satisfies a predefined criterion and, if a mismatch occurs there between:
- a single one, a part or all of the transverse members in the said other one row section are replaced by one or more transverse members of the respective other type or types, i.e. by transverse members having a different thickness, to remove the said mismatch determined in the previous step of the drive belt assembly method.

By adding these three steps to the above, novel assembly method, the length of the complete row of transverse members that is incorporated in the drive belt can be influenced. This influence is normally desired to compensate for manufacturing tolerances in the thickness of the individual transverse member and/or in the circumference length of the endless carrier, as is for example described in the European patent publication No. 1 178 240 A2, however, in relation to a drive belt initially including only transverse members of the same nominal thickness.

In a preferred embodiment of this latter, novel assembly method, the said other one row section is initially assembled from transverse members of one single type, i.e. transverse members having the same thickness, whereas in the final step of the novel assembly method, these transverse members are replaced by transverse members of another one single type, i.e. thickness. These latter features greatly simplify the final step of the novel assembly method, since a direct relationship exists between the number of transverse members thus replaced and the reduction of the clearance gap that is attained thereby.

However, in this preferred embodiment, it can occur that the said other one row section includes only or primarily transverse members of one single type, i.e. of one single thickness, which is likely to increase the transmission noise contrary to what is presently aimed for. Therefore, in case the other one row section includes only or primarily transverse members of identical thickness, the said one row section that includes transverse elements of multiple thicknesses according to a predetermined sequence, should preferably include between 95 to 98% of the total number of transverse members in the drive belt.

Naturally, the longer said one row section with transverse elements of multiple thicknesses according to a predetermined sequence is, the less flexibility is provided by the novel assembly method in terms of the ratio between the thinner versus the thicker transverse members between the produced drive belts. In order to improve upon such flexibility, in particular in relation to the latter, preferred embodiment of the novel assembly method, a further embodiment of the novel drive belt assembly method has been devised. In this further embodiment the complete row of transverse members included in the drive belt is provided with a third row section, i.e. in addition to the said one and other one row sections that have already been discussed. This third row section is randomly assembled from transverse members of two or more types, i.e. from transverse members having a mutually different thickness. By such random assembly a noise attenuating effect is obtained that is similar to that of the said predetermined sequence of transverse element types in the said one row section is obtained. However, such random assembly of the third row section does additionally allow the inclusion of the types of the transverse members according to a conveniently variable ratio. In this respect, it has been determined that such randomly assembled, third row section can include up to 25% of the total number of transverse members in the drive belt without nullifying the noise attenuation effect of the said one row section including transverse elements of multiple thicknesses according to a predetermined sequence. Furthermore, to the same effect, it has been determined that the said third row section must include 70% or less transverse members of one single type, i.e. of one and the same thickness.

The background for the above insights and embodiments are explained hereinafter with reference to the accompanying drawing figures. In the drawing figures equal reference signs indicate equal or similar structures and/or parts.
Figure 1 provides a schematic perspective view of the continuously variable transmission with a drive belt running over two pulleys, which drive belt includes an endless carrier, as well as a number of transverse members that are arranged in a row along the circumference of the endless carrier.
Figure 2 shows a cross section of the known drive belt viewed in the circumference direction thereof.
Figure 3 provides a width-wise oriented view of a transverse member of the known drive belt.
Figure 4 is a first schematic representation of a row of transverse members of the drive belt in accordance with the present disclosure, which row includes transverse members of two types, each type having a different size in terms of a respective thickness thereof, and which row is divided into two sections that are mutually distinguishable by the distribution of these different types of transverse members.
Figure 5 is a second schematic representation of a row of transverse members of the drive belt in accordance with the present disclosure.
Figure 6 is a third schematic representation of a row of transverse members of the drive belt in accordance with the present disclosure.
Figure 7 is a fourth schematic representation of a row of transverse members of the drive belt in accordance with the present disclosure, which row is divided into three sections that are mutually distinguishable by the distribution of the transverse members of different types.

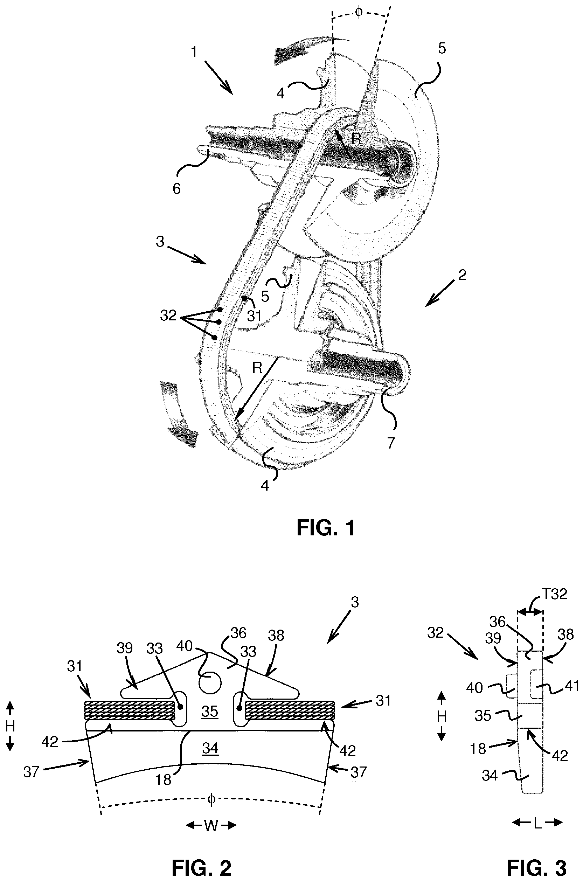

The schematic illustration of a continuously variable transmission in Figure 1 shows a drive belt 3 that runs over two pulleys 1, 2 and that includes a closed, i.e. endless carrier 31 and an essentially contiguous row of transverse members 32 that are mounted on the carrier 31, arranged along the circumference thereof. In the illustrated position, the upper pulley 1 rotates more quickly than the lower pulley 2. By changing the distance between the two conical sheaves 4, 5 of each pulley 1, 2, the so-called running radius R of the drive belt 3 on the respective pulleys 1, 2 can be changed and, as a result, the rotational speed ratio i between the two pulleys 1, 2 can be varied. This is a known manner of varying a difference in rotational speed between an input shaft 6 and an output shaft 7 of the transmission.

In Figure 2, the drive belt 3 is shown in a cross section thereof facing in the circumference or length direction L of the belt 3, i.e. facing in a direction perpendicular to the axial or width W direction and the radial or height H direction of the drive belt 3. This Figure 2 shows the presence of two endless carriers 31 that are shown in cross-section and that carry and guide the transverse members 32 of the drive belt 3, whereof one transverse member 32 is shown in front elevation in Figure 2.

The transverse members 32 and the endless carriers 31 of the drive belt 3 are typically made of metal, usually steel. The transverse members 32 take-up a clamping force exerted between the sheaves 4, 5 of each pulley 1, 2 via pulley contact faces 37 that are provided on either axial side thereof. These pulley contact faces 37 are mutually diverging in radial outward direction, whereby the angle that is defined there between essentially matches a V-angle defined between the two sheaves 4, 5 of each pulley 1, 2. The transverse members 32 are able to move, i.e. slide along the endless carriers 31 in the said circumference direction L, so that when a force is transmitted between the transmission pulleys 1, 2, this force is transmitted by the transverse members 32 pressing against one another and pushing each other forward in a direction of rotation of the drive belt 3 and the pulleys 1, 2. In this particular exemplary embodiment of the drive belt 3, the endless carriers 31 thereof are composed of five individual endless bands each, which endless bands are mutually concentrically nested to form the endless carrier 31. In practice, the endless carriers 31 often comprise more than five endless bands, e.g. up to twelve or more.

The transverse member 32, which is also shown in a side view in Figure 3, is provided with two cut-outs 33 located opposite one another and opening widthwise, towards opposite sides of the transverse member 32. Each cut-out 33 accommodates a respective one of the two endless carriers 31. A first or base portion 34 of the transverse member 32 thus is located radially inward of the endless carriers 31, a second or middle portion 35 of the transverse member 32 is situated in between the endless carriers 31 and a third or top portion 36 of the transverse member 32 is located radially outward of the endless carriers 31. The radially inner side of a respective cut-out 33 is delimited by a so-called bearing surface 42 of the base portion 34 of the transverse member 32, which bearing surface 42 faces radially outwards in the general direction of the top portion 36. This bearing surface 42 contacts the radial inside of the endless carrier 31, especially in the parts of the drive belt 3 that are clamped between the sheaves 4, 5 of the transmission pulleys 1, 2.

A first or rear surface 38 of the two main body surfaces 38, 39 of transverse member 32 that face in mutually opposite circumference directions L, is essentially flat. The other or front main body surface 39 of the transverse member 32 is provided with a so-called rocking edge 18 that forms, in the radial direction H, the transition between an upper part of the front surface 39, extending essentially in parallel with its rear surface 38, and a lower part thereof that is slanted such that it extends towards the rear surface 38. In Figure 2 the rocking edge 18 is indicated only schematically by way of a single line, however, in practice the rocking edge 18 is mostly provided in the form of a part of the said front surface 39 that is convexly curved in the radial direction H and that is straight and flat in the axial direction W. Thus, an upper part of the transverse member 32 that is located radially outward from/above the rocking edge 18 is provided with an essentially constant dimension between the main body surfaces 38, 39 thereof, i.e. as seen in the circumference direction L, which dimension is referred to as the thickness T32 of the transverse member 32. Furthermore, it is common practice to provide with a protrusion 40 and a recess 41 in the top portion 36 of the transverse member 32, however on opposite sides thereof. In the drive belt 3, this protrusion 40 and recess 41 engage one another between adjacent transverse members 32 in the row of transverse members 32. Hereby, the adjacent transverse members 32 are aligned relative to one another perpendicular to the said circumference direction L.

Typically, the said thickness T32 is the same for virtually all, i.e. for more than 98%, of the transverse members 32 of the drive belt 3, with a value in the range from 1 to 2 millimeter. A typical value for the said thickness T32 of the transverse members 32 is 1.5 mm and a typical value for the said circumference direction L is 0.7 meter.

During operation of the transmission, i.e. during the rotation of the pulleys 1, 2 and the drive belt 3, the transverse members 32 thereof successively enter between the pulley discs 4, 5, by which repeated contact between the transverse members 32 and the pulleys discs 4, 5 vibrations are generated, which vibrations may, in turn, generate noise that is audible by the occupants of the vehicle wherein the transmission is applied. It is a known design principle to make the said repeated contact less regular by applying transverse members 32 of mutually different thicknesses in the row of transverse members 32 of the drive belt 3. For example, in this respect it is known from EP-A-0305023 to apply two types of transverse members 32 of mutually different thickness in a random distribution in the said row of transverse members 32 of the drive belt 3. US-A-2006/ 0079361 goes one step further by checking several of such random distributions in terms of the said noise level and to apply in mass production of the drive belt 3 only that distribution, i.e. that specific sequence of the sequence transverse members 32 of certain thickness that is associated with the lowest noise level during operation of the transmission. According to the present disclosure, the latter approach of US-A-2006/ 0079361, although favorable over EP-A-0305023 in terms of consistency in mass production, does not provide any flexibility in terms of the relative use of the transverse members 32 of different thickness, nor is it possible to influence the length of the complete row of transverse members 32 that is incorporated in the drive belt 3.

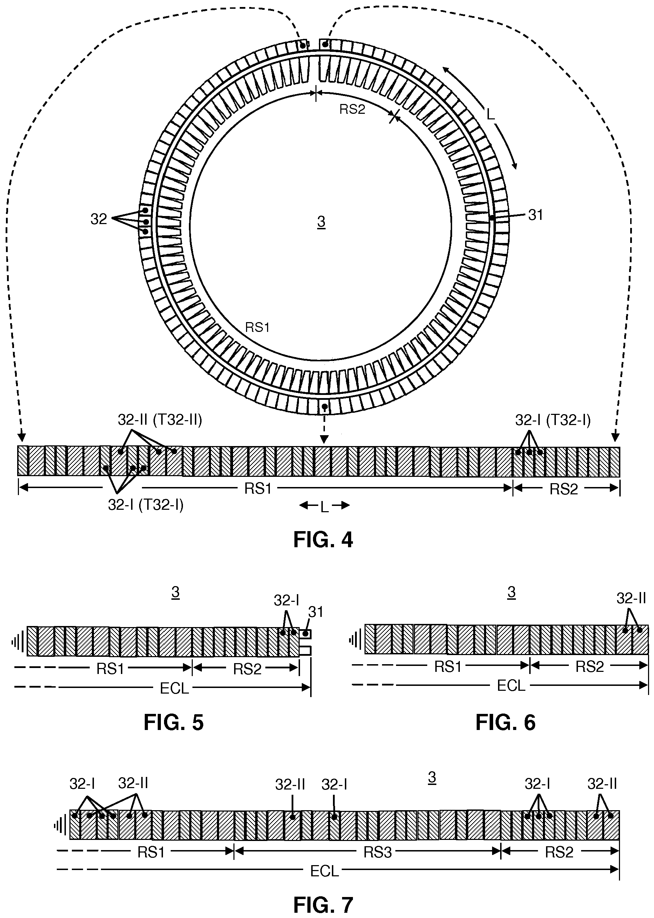

In order to overcome these limitations of the known art, it is presently suggested to provide the complete row of transverse members 32 of in the drive belt 2 in at least two row parts or sections RS1 and RS2, whereof one row section RS1 is provided on the endless carrier 31 of the drive belt 3 according to a predetermined sequence of two or more types of transverse members 32-1, 32-11 that differ at least in terms of the thickness T32-I, T32-II thereof and whereof the other one row section RS2 is assembled by filling the remaining circumference length of the endless carrier 31 with transverse members 32 of any type 32-1, 32-11, as is schematically illustrated in figure 4 with the said other one row section RS2 including only one type of transverse elements 32-1, i.e. of one thickness T32-I only.

It is noted that this Figure 4 (and later ones) serves to illustrate the basic (design) principles of the present disclosure, but does not provide a true representation of the drive belt 3 or of the row of transverse members 32 thereof, neither in term of the number of transverse members 32 included therein, nor in terms of the absolute or relative size and shape of these transverse members 32.

The predetermined sequence of transverse members 32-1, 32-11 in the said one row section RS1 is of course (pre-)defined such that the transmission produces minimal noise during operation, whereas the said other one row section RS2 is assembled according to any ratio of thinner transverse members 32-1 versus thicker transverse members 32-11. This latter, other one row section RS2 thus allows the incorporation of the various types of transverse members 32-1, 32-11 into the drive belt 3 to be adapted in relation to the respective rate of production thereof.

In most cases, the combined thickness of the transverse members 32 in the complete row of transverse members 32 of the thus assembled drive belt 3 will not exactly match the circumference direction of the endless length of circumference length ECL of the endless carrier 31 thereof, but will be slightly less than such circumference length ECL, as is illustrated in figure 5. Then, in order to reduce a clearance gap between the transverse members 32 in the circumference direction L of the drive belt 3, one or more of the transverse members 32 of a specific type 32-I or 32-II, i.e. of a specific thickness T32-I or T32-II, in the said other one row section RS2 can then be exchanged with one or more transverse members 32 of the respective other type 32-II; 32-I (i.e. thickness T32-I; T32-II) to reduce such clearance gap. In the present example of figures 5 and 6, two relatively thin transverse members 32-1 in the said other one row section RS2 of the initially assembled drive belt 3 (figure 5) are replaced by two relatively thick transverse members 32-II, as a result whereof the complete row of transverse members 32 of the finally assembled drive belt 3 substantially matches the circumference direction of the endless length of circumference length ECL of the endless carrier 31 thereof, as is illustrated in figure 6. However, in general in such final assembly of the drive belt 3, a number of relatively thin transverse members 32-1 in the said other one row section RS2 is replaced by an equal number of relatively thick transverse members 32-11 and/or a number of relatively thick transverse members 32-11 in the said other one row section RS2 is replaced by 1 more than such number of relatively thin transverse members 32-II. In doing so the predetermined sequence of transverse members 32-I, 32-II in the said one row section RS1 remain unaffected, as well as the noise attenuating effect that is provided thereby.

This latter, two stage assembly method can be carried out relatively simply if all transverse members 32 in the said other one row section RS2 are of single type 32-I or 32-II. However, the flexibility that is aimed for by the present disclosure in terms of a variable ratio of thinner versus thicker transverse members incorporated in the mass produced drive belts 3 would then not be realized. Therefore, in a further embodiment of the novel drive belt assembly method in accordance with the present disclosure, the complete row of transverse members 32 included in the drive belt is provided with a third row section RS3, as illustrated in figure 7. This third row section RS3 is randomly assembled from transverse members 32 of two or more types 32-I and 32-II, i.e. from transverse members having a mutually different thickness T32-I or T32-II, according to a ratio there between that reflects the current production rate and/or currently available stock of the various types of transverse members 32-I, 32-II.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible to apply any combination of two or more of such features therein.

The invention(s) represented by the present disclosure is (are) not limited to the embodiments and/or the examples that are explicitly mentioned herein, but also encompasses amendments, modifications and practical applications thereof, in particular those that lie within reach of the person skilled in the relevant art.

## Claims

1. Method for the mass production of drive belts (3), each with an endless carrier (31) and a row of transverse members (32) that are consecutively mounted on the endless carrier (31) and that are each provided with a front main body face (39) and of a rear main body face (38) where between the transverse member (32) extends in thickness direction and of pulley contact faces (37) where between the transverse member extends in width direction, which pulley contact faces (37) are destined for contact with pulley discs (4, 5) of pulleys (1, 2) of a transmission wherein the drive belt (3) can be applied, which mass production method includes the assembly of the drive belts (3) from transverse members (32) of at least two types (32-I, 32-II) with a mutually different dimension in thickness direction (T32-I; T32-II), wherein initially, the row of transverse members (32) of the drive belt (3) is assembled in at least two parts (RS1, RS2), whereof a first row part (RS1) includes transverse members (32) of both of the said types (32-I; 32-II) and is assembled according to predetermined sequence of the said types (32-I; 32-II) of transverse members (32) and whereof a second row part (RS2) is assembled from only one of the said at least two types (32-I, 32-II) of transverse members (32), **characterized in that**, after the row of transverse members (32) has been initially assembled, a difference between a circumference length of the endless carrier (31) and a combined length of the said first and second row parts (RS1; RS2) of the row of transverse members (32) of the drive belt (3) is determined, and **in that**, subsequently, a number of transverse members (32) of a first one of the said two types (32-I; 32-II) of the transverse members (32) is removed from the said second row part (RS2) and a number of transverse members (32) of a respective other one of the said two types (32-I; 32-II) of the transverse members (32) is added, which numbers of removed and added transverse members (32) are related to the said determined length difference.

2. The method for the assembly of a drive belt (3) according to claim 1, wherein the said first row part (RS1) comprises at least 95% and at most 98% of all of the transverse members included in the drive belt (3).

3. The method for the assembly of a drive belt (3) according to claim 1, wherein the row of transverse members (32) of the drive belt (3) is composed of at least three row parts (RS1, RS2, RS3), whereof a third row part (RS3) is assembled from transverse members (32) of several of the said at least two types (32-I, 32-II) thereof in any sequence thereof.

4. The method for the assembly of a drive belt (3) according to claim 3, wherein the said first row part (RS1) comprises at least 70% of all of the transverse members (32) included in the drive belt (3).

5. The method for the assembly of a drive belt (3) according to claim 4, wherein the said third row part (RS3) comprises at most 25% of all of the transverse members (32) included in the drive belt (3).

6. The method for the assembly of a drive belt (3) according to claim 4 or 5, wherein the said third row part (RS3) comprises at most 70% of a specific one of the said two types (32-I; 32-II) of the transverse members (32) of the drive belt (3).

## Patentansprüche

1. Verfahren für die Massenfertigung von Antriebsriemen (3), jeweils mit einem Endlosträger (31) und einer Reihe von Querelementen (32), die nacheinander an dem Endlosträger (31) befestigt und jeweils mit einer vorderen Hauptkörperfläche (39) und einer hinteren Hauptkörperfläche (38) versehen sind, zwischen denen sich das Querelement (32) in Dickenrichtung erstreckt, und mit Umlenkrollenkontaktflächen (37), zwischen denen sich das Querelement in Breitenrichtung erstreckt, wobei die Umlenkrollenkontaktflächen (37) für einen Kontakt mit Riemenscheiben (4, 5) von Umlenkrollen (1, 2) eines Getriebes bestimmt sind, wobei der Antriebsriemen (3) angelegt werden kann, wobei das Massenfertigungsverfahren den Zusammenbau der Antriebsriemen (3) aus Querelementen (32) wenigstens zweier Arten (32-I, 32-II) mit einer beiderseits unterschiedlichen Abmessung in Dickenrichtung (T32-I; T32-II) umfasst, wobei zunächst die Reihe von Querelementen (32) des Antriebsriemens (3) in wenigstens zwei Teilen (RS1, RS2) zusammengebaut wird, von denen ein erster Reihenteil (RS1) Querelemente (32) beider Arten (32-I; 32-II) umfasst und gemäß einer vorgegebenen Reihenfolge der Arten (32-I; 32-II) von Querelementen (32) zusammengebaut wird und von denen ein zweiter Reihenteil (RS2) nur aus einer der wenigstens zwei Arten (32-I, 32-II) von Querelementen (32) zusammengebaut wird,
**dadurch gekennzeichnet, dass**, nachdem die Reihe von Querelementen (32) zunächst zusammengebaut worden ist, eine Differenz zwischen einer umlaufenden Länge des Endlosträgers (31) und einer kombinierten Länge des ersten und des zweiten Reihenteils (RS1; RS2) der Reihe von Querelementen (32) des Antriebsriemens (3) ermittelt wird, und dass anschließend eine Anzahl von Querelementen (32) einer ersten der zwei Arten (32-I; 32-II) von Querelementen (32) aus dem zweiten Reihenteil (RS2) entfernt wird und eine Anzahl von Querelementen (32) einer entsprechenden anderen der zwei Arten (32-I; 32-II) der Querelemente (32) hinzugefügt wird, wobei sich die Anzahlen der entfernten und hinzugefügten Querelemente (32) auf die ermittelte Längendifferenz beziehen.

2. Verfahren für den Zusammenbau eines Antriebsriemens (3) nach Anspruch 1, wobei der erste Reihenteil (RS1) wenigstens 95% und höchstens 98% aller in dem Antriebsriemen (3) enthaltenen Querelemente umfasst.

3. Verfahren für den Zusammenbau eines Antriebsriemens (3) nach Anspruch 1, wobei die Reihe von Querelementen (32) des Antriebsriemens (3) aus wenigstens drei Reihenteilen (RS1, RS2, RS3) besteht, von denen ein dritter Reihenteil (RS3) aus Querelementen (32) mehrerer der wenigstens zwei Arten (32-I, 32-II) derselben in jeder beliebigen Reihenfolge derselben zusammengebaut wird.

4. Verfahren für den Zusammenbau eines Antriebsriemens (3) nach Anspruch 3, wobei der erste Reihenteil (RS1) wenigstens 70% aller in dem Antriebsriemen (3) enthaltenen Querelemente (32) umfasst.

5. Verfahren für den Zusammenbau eines Antriebsriemens (3) nach Anspruch 4, wobei der dritte Reihenteil (RS3) höchstens 25% aller in dem Antriebsriemen (3) enthaltenen Querelemente (32) umfasst.

6. Verfahren für den Zusammenbau eines Antriebsriemens (3) nach Anspruch 4 oder 5, wobei der dritte Reihenteil (RS3) höchstens 70% einer speziellen der zwei Arten (32-I; 32-II) der in dem Antriebsriemen (3) enthaltenen Querelemente (32) umfasst.

## Revendications

1. Procédé de fabrication en série de courroies de transmission (3) comportant chacune un support sans fin (31) et une rangée d'éléments transversaux (32) qui sont montés successivement sur le support sans fin (31) et qui sont munis chacun d'une face avant de corps principal (39) et d'une face arrière de corps principal (38) entre lesquelles l'élément transversal (32) s'étend dans le sens de l'épaisseur et des faces de contact de poulie (37) entre lesquelles l'élément transversal s'étend dans le sens de la largeur, ces faces de contact de poulie (37) sont destinées à être en contact avec des disques de poulie (4, 5) des poulies (1, 2) d'une transmission dans laquelle la courroie de transmission (3) peut être appliquée, lequel procédé de fabrication en série comprend l'assemblage des courroies de transmission (3) à partir d'éléments transversaux (32) d'au moins deux types (32-I, 32-II) ayant des dimensions mutuellement différentes dans la direction d'épaisseur (T32-I; T32-II), initialement, la rangée d'éléments transversaux (32) de la courroie de transmission (3) étant assemblée en au moins deux parties (RS1, RS2), dont une première partie de rangée (RS1) comprend des éléments transversaux (32) des deux types (32-I; 32-II) et est assemblée selon une séquence prédéterminée desdits types (32-I; 32-II) d'éléments transversaux (32) et dont une deuxième partie de rangée (RS2) est assemblée à partir d'un seul desdits au moins deux types (32-I, 32-II) d'éléments transversaux (32), **caractérisé en ce que**, après que la rangée d'éléments transversaux (32) a été initialement assemblée, une différence entre une longueur de circonférence du support sans fin (31) et une longueur combinée desdites première et deuxième parties de rangées (RS1; RS2) de la rangée d'éléments transversaux (32) de la courroie de transmission (3) est déterminée, et **en ce que**, par la suite, un certain nombre d'éléments transversaux (32) d'un premier desdits deux types (32-I; 32-II) des éléments transversaux (32) est retiré de ladite deuxième partie de rangée (RS2) et un nombre d'éléments transversaux (32) d'un second desdits deux types (32-I; 32-II) respectifs des éléments transversaux (32) est ajouté, ces nombres d'éléments transversaux retirés et ajoutés (32) étant associés à ladite différence de longueur déterminée.

2. Procédé d'assemblage d'une courroie de transmission (3) selon la revendication 1, dans lequel ladite première partie de rangée (RS1) comprend au moins 95% et au plus 98% de tous les éléments transversaux inclus dans la courroie de transmission (3).

3. Procédé d'assemblage d'une courroie de transmission (3) selon la revendication 1, dans lequel la rangée d'éléments transversaux (32) de la courroie de transmission (3) est composée d'au moins trois parties de rangée (RS1, RS2, RS3), dont une troisième partie de rangée (RS3) est assemblée à partir d'éléments transversaux (32) de plusieurs desdits au moins deux types (32-I, 32-II) dans une séquence quelconque.

4. Procédé d'assemblage d'une courroie de transmission (3) selon la revendication 3, dans lequel ladite première partie de rangée (RS1) comprend au moins 70% de tous les éléments transversaux (32) inclus dans la courroie de transmission (3).

5. Procédé d'assemblage d'une courroie de transmission (3) selon la revendication 4, dans lequel ladite troisième partie de rangée (RS3) comprend au plus 25% de tous les éléments transversaux (32) inclus dans la courroie de transmission (3).

6. Procédé d'assemblage d'une courroie de transmission (3) selon la revendication 4 ou 5, dans lequel ladite troisième partie de rangée (RS3) comprend au plus 70% d'un type spécifique desdits deux types (32-I; 32-II) d'éléments transversaux (32) de la courroie de transmission (3).
